# EUROPEAN PATENT SPECIFICATION

(11) **EP 1 754 142 B1**
(45) Date of publication and mention of the grant of the patent: **28.05.2008**
(21) Application number: 05738590.8
(22) Date of filing: 18.05.2005
(51) Int. Cl.: G06F 9/30, G06F 9/38, G06F 9/318

(54) **MICROPROCESSOR AND METHOD OF INSTRUCTION ALIGNMENT**
MIKROPROZESSOR UND VERFAHREN ZUR ANWEISUNGSAUSRICHTUNG
MICROPROCESSEUR ET PROCEDE D'ALIGNEMENT D'INSTRUCTIONS

(30) Priority: 27.05.2004 EP 04102357
(43) Date of publication of application: 21.02.2007
(73) Proprietor: NXP B.V., 5656 AG Eindhoven (NL)
(72) Inventor: HOOGERBRUGGE, Jan, NL-5656 AA Eindhoven (NL)
(74) Representative: Röggla, Harald
(86) International application number: PCT/IB2005/051617
(87) International publication number: WO 2005/116819

(56) References cited:
- US-A- 6 081 884
- US-B1- 6 192 465
- US-B1- 6 240 506
- US-B1- 6 247 097

## Description

### FIELD OF THE INVENTION

The invention relates to a microprocessor, a method of instruction alignment as well as a data processing system.

### BACKGROUND OF THE INVENTION

Microprocessors or data processing systems based on variable length, compressed instruction formats allow an efficient compression of instructions (like TriMedia instructions) at a moderate cost with regard to the critical timing path and the silicon area of the decompression hardware. The instructions may be unaligned and may have variable lengths. In particular, the instructions may be unaligned regarding the instruction cache word boundaries, the instruction cache block boundaries or main memory word or block boundaries. However, instructions may also be aligned on byte boundaries.

US 6,240,506 relates to extending x86 instructions with variable length operands to a fixed length. A microprocessor receives instructions with varying address and operand sizes and predecodes them into a single fixed sized format. In particular, instruction bytes are received from a main memory system, and may be predecoded by expanding the operand and address which are shorter then a predetermined length by padding them with zeros to increase the uniformity of the address and operand fields.

During the processing of instructions, instructions are usually scanned, aligned and decoded. Scanning involves reading a group of instruction bytes from a instruction cache in a microprocessor or from an external memory and determining the boundaries of those instructions. Aligning is performed by masking undesired instruction bytes and shifting those bytes such that the first bit of these bytes is in a desired position. And finally decoding is achieved by identifying each field within the instruction and takes place after the instruction has been prefetched from the instruction cache, scanned and aligned.

Typically, the instructions to be processed by a microprocessor may also comprise branches, which constitute additional problems during its execution. A good understanding of the flow of the branches can increase the speed of the processing. However, as a misaligned cache access will introduce extra latency, it becomes necessary to provide aligned instruction cache accesses. Within the alignment process branch targets, i.e. program positions to which the processing flow can jump, should be carefully positioned.

Accordingly, the branch targets have to be aligned to certain positions or may not cross cache line boundaries, i.e. fall entirely within one word of the cache such that it becomes possible to read the branch target instruction from merely one cache word. This is typically performed by padding bytes in front of the branch target in order to move the branch target entirely into the following cache word. However, if the branch target starts within the cache word without extending outside said cache word, no padding is necessary.

For example, in the Intel architecture and in the TriMedia architecture the alignment of the branch targets are performed by inserting dummy bytes, in order to shift the branch target to an allowable position or to a position where it results in a faster code. As the dummy bytes also known as padding bytes are not required for the processing of the current instruction, a jump is generated in order to jump over the dummy bytes to the specific branch target.

In particular, for the Intel architecture the branch target alignment recommendations (http://www.intel.com/design/PentiumII/ manuals/242816.htm) are to align loop entry labels to 16-bytes if they are less then eight bytes away from a 16-byte cache boundary; not to align loop entry labels which follow a conditional branch; and to align loop entry labels which follow an unconditional branch or a function by 16-bytes if they are less than eight bytes away from a 16-bytes boundary.

USP 6 192 465 describes a microprocessor capable of out-of-order instruction decoding and in-order dependency checking. The microprocessor includes an instruction cache, two decode units, a reorder queue, and dependency checking logic. Each cache line output by the instruction cache is allocated a storage line within the reorder queue. Each storage line comprises storage for sixteen decoded instructions. If the cache line has less than sixteen instructions, the remaining storage locations within the storage line are designated empty or are padded with NOP (no operation) instructions.

Although such an alignment process using the inserted dummy bytes or padding bytes improves the processing of certain instructions, this advantage comes with the costs of increased storage requirements.

It is therefore an object of the invention to provide a microprocessor, a method of instruction alignment as well as a data processing system which allow an adequate processing of instructions with improved storage utilization.

This object is solved by an microprocessor according to claim 1, by a method for instruction alignment according to claim 4 as well as by a data processing system according to claim 5.

Therefore, a microprocessor for processing instructions is provided. Said microprocessor comprises a cache for caching instructions and/or data to be processed, which are arranged in cache words, and an alignment unit for aligning instructions to predetermined positions with regard to cache word boundaries of said cache by introducing padding bytes. At least one of said padding bytes include static data, which are required within the processing of one of said instructions.

Accordingly, the padding bytes which are required for the alignment of the instructions, can be utilized for data which is needed during the processing of the instruction such that these bytes are not wasted and the available storage capacity is efficiently used.

According to an aspect of the invention said alignment unit aligns branch targets by introducing padding bytes. Hence, the speed of the processing can be improved without sacrificing an efficient storage capacity utilization.

According to a preferred aspect of the invention said static data comprise global variables, constants or text strings.

The invention also relates to a method for instruction alignment during the processing of instructions. Instructions and/or data to be processed are cached, wherein said instructions are arranged in cache words. The instructions are aligned to predetermined positions with regard to said cache word boundaries by introducing padding bytes. At least one of said padding bytes include static data, which are required within the processing of one of said instructions.

The invention further relates to a data processing system comprising an microprocessor as described above.

These and other aspects of the invention are apparent from and will be elucidated with reference to the embodiments described hereinafter.

### BRIEF DESCRIPTION OF THE DRAWINGS

Fig. 1A-1C shows a schematic representation of several cache words in a cache; and
Fig. 2 shows an illustration of a table of content of a cache word.

### DESCRIPTION OF THE PREFERRED EMBODIMENTS

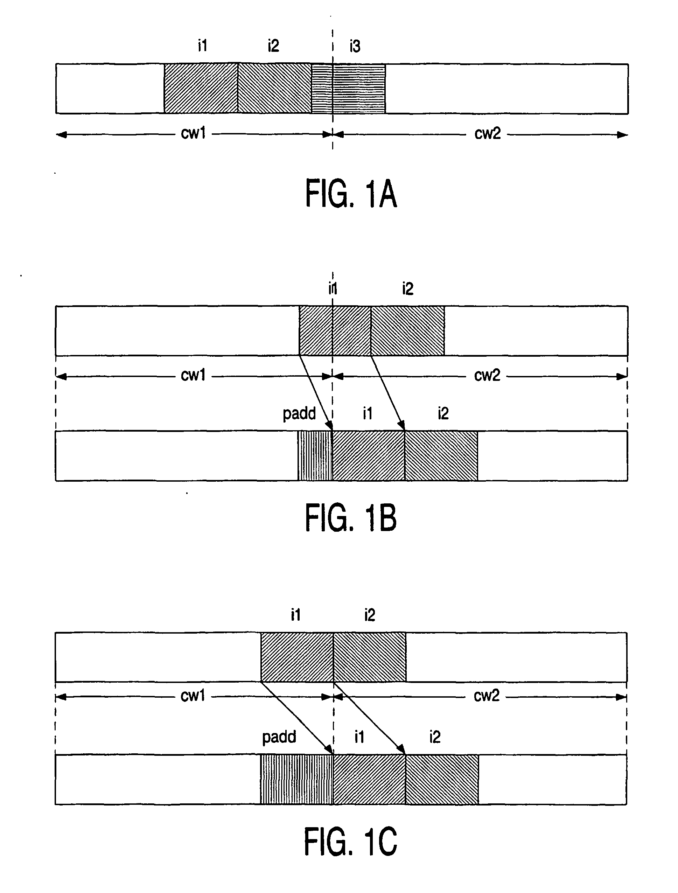

Fig. 1A-1C show a schematic representation of cache words within a cache. In Fig. 1A three unaligned instructions il, i2 and i3 are present in cache words cw1, cw2. For example, the branch target of i l entirely falls within cache word cw1 while the instruction i3 crosses the cache word boundary of cache word cw1 and extends into cache word cw2. Accordingly, here the situation is represented which is to be avoided.

Fig. 1B shows a situation with the instructions i1 and i2, wherein instruction i1 crosses the boundary between cache word cw1 and cache word cw2. Instruction i2 entirely falls within the cache word cw2. In order to prevent the crossing of word boundaries of the instruction il, padding bytes padd are inserted before the instruction i1 in order to shift the instruction entirely to the next cache word, i.e. cache word cw2. Hence, the instruction i1 and the instruction i2 are now both present in the cache word cw2. In particular, the undesirable case that the branch target of instruction i1 falls on a word boundary is prevented by inserting the padding bytes padd.

Fig. 1C shows a situation where the branch target of i l falls at the end of a cache word and therefore needs to be shifted to the next one. This is also preformed by inserting padding bytes pad.

While according to the prior art dummy bytes are inserted as padding bytes and a jump instruction is additionally inserted such that a process flow does not process the inserted dummy bytes, according to the invention static data which are required during the processing of the instruction is used as padding bytes. These static data may be global variables like constants or the like. Accordingly, instead of inserting bytes which are irrelevant for the processing, data which are actually used during the processing are utilized as padding bytes, such that the padding bytes are not wasted and the utilization of the available storage capacity is improved.

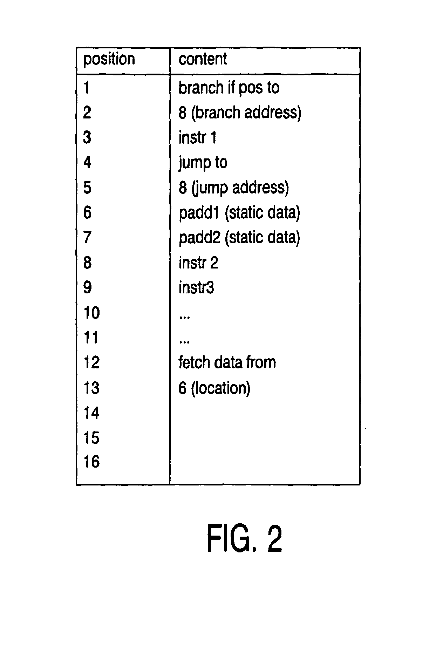

Fig. 2 shows a basic illustration of a table of the content of a cache word. As position 1 a conditional branch instruction causes a conditional branch to align the location or position 8 if the branch instruction is fulfilled, i.e. if the condition is fulfilled then a jump is performed to position 8. Otherwise, the location 8 comprising the second instruction instr2 is present and can be reached by a jump from position 4 (jump to). Padding bytes padd1 and padd2 are inserted at locations 6 and 7 in order to shift the second and third instruction instr2, instr3 to location 8 and 9, such that the jump will be aligned with the second instruction instr2. Thereby the aligned position 8 is provided before the sequence of instruction starts. At location 12, a fetch instruction is present, which fetches the data at location 6, i.e. padding data padd1. In particular, at locations 6 and 7, i.e. the padding data, static data is stored instead of using dummy bytes. These static data may be global variables constants or the like. Other examples of static data are text strings and data structures that a compiler (used to compile the instructions) generates for implementing exceptions and virtual functions in C++.

In particular, at least some of the static data stored as padding data may constitute data which is used for the execution of the instruction in the buffer. Alternatively, the padding data may also be associated to a further instruction within the same cache word. In other words, the instructions before or after the padding space may use the data that is allocated in the padding space. However, alternatively any instruction in the program can reference the data in the padding space.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. In the device claim enumerating several means, several of these means can be embodied by one and the same item of hardware. The mere fact that certain measures are recited in mutually different dependent claims does not indicate that a combination of these measures cannot be used to advantage.

Furthermore, any reference signs in the claims shall not be construed as limiting the scope of the claims.

## Claims

1. Microprocessor for processing instructions, comprising:
- at least one cache for caching instructions and/or data to be processed, which are arranged in cache words (cw1, cw2), and
- an alignment unit for aligning instructions to predetermined positions with regard to cache word boundaries of said cache by introducing padding bytes (padd1, padd2),
**characterized in that** at least one of said padding bytes (padd1, padd2) includes static data, which are required within the processing of one of said instructions.

2. Microprocessor according to claim 1, wherein said alignment unit is further adapted to align branch targets by introducing padding bytes.

3. Microprocessor according to claim 2, wherein said static data comprise global variables or constants.

4. Method for instruction alignment during the processing of instructions, comprising the steps of:
- caching instructions and/or data to be processed, which are arranged in cache words, and
- aligning instructions to predetermined positions with regard to cache word boundaries by introducing padding bytes (padd1, padd2),
**characterized in that** at least one of said padding bytes (padd1, padd2) includes static data, which are required within the processing of one of said instructions.

5. Data processing system comprising at least one microprocessor according to any one of claims 1 to 3.

## Patentansprüche

1. Mikroprozessor zum Verarbeiten von Befehlen, umfassend:
- mindestens einen Cache zum Kopieren von zu verarbeitenden Befehlen und/oder Daten in den Cache, die in Cacheworten (cw1, cw2) angeordnet sind, und
- eine Ausrichteinheit zum Ausrichten von Befehlen auf vorgegebene Positionen hinsichtlich Cachewortgrenzen besagten Caches durch Einfügen von Füllbytes (padd1, padd2),
**dadurch gekennzeichnet, dass** mindestens eines der besagten Füllbytes (padd1, padd2) statische Daten einschließt, die während der Verarbeitung einer der besagten Befehle benötigt werden.

2. Mikroprozessor nach Anspruch 1, wobei besagte Ausrichteinheit ferner so ausgelegt ist, dass sie Verzweigungsziele durch Einfügen von Füllbytes ausrichtet.

3. Mikroprozessor nach Anspruch 2, wobei besagte statische Daten globale Variablen oder Konstanten umfassen.

4. Verfahren zur Befehlsausrichtung während der Verarbeitung von Befehlen, umfassend die folgenden Schritte:
- Kopieren von zu verarbeitenden Befehle und/oder Daten, die in Cacheworten angeordnet sind, in den Cache, und
- Ausrichten von Befehle auf vorgegebene Positionen hinsichtlich Cachewortgrenzen durch Einfügen von Füllbytes (padd1, padd2),
**dadurch gekennzeichnet, dass** mindestens eines der besagten Füllbytes (padd1, padd2) statische Daten einschließt, die während der Verarbeitung einer der besagten Befehle benötigt werden.

5. Datenverarbeitungssystem, umfassend mindestens einen Mikroprozessor nach einem der Ansprüche 1 bis 3.

## Revendications

1. Microprocesseur pour traiter des instructions, comprenant :
- au moins un cache pour cacher les instructions et/ou les données à traiter qui sont disposées dans des mots de caches (cw1, cw2), et
- une unité d'alignement pour aligner les instructions sur des positions prédéterminées par rapport aux limites de mots de caches dudit cache en introduisant des multiplets de remplissage (padd1, padd2),
**caractérisé en ce qu'**au moins l'un desdits multiplets de remplissage (padd1, padd2) comprend des données statiques qui sont nécessaires à l'intérieur du traitement de l'une desdites instructions.

2. Microprocesseur selon la revendication 1, dans lequel ladite unité d'alignement est de plus capable d'aligner des cibles d'embranchement en introduisant des multiplets de remplissage.

3. Microprocesseur selon la revendication 2, dans lequel lesdites données statiques comprennent des constantes ou variables globales.

4. Procédé pour l'alignement d'instructions pendant le traitement d'instructions, comprenant les étapes consistant à :
- cacher les instructions et/ou les données à traiter qui sont disposées dans des mots de caches, et
- aligner les instructions sur des positions prédéterminées par rapport aux limites de mots de caches en introduisant des multiplets de remplissage (padd1, padd2),
**caractérisé en ce qu'**au moins l'un desdits multiplets de remplissage (padd1, padd2) comprend des données statiques qui sont nécessaires à l'intérieur du traitement de l'une desdites instructions.

5. Système de traitement de données comprenant au moins un microprocesseur selon l'une quelconque des revendications 1 à 3.
